(19) Europäisches Patentamt
European Patent Office
Office européen des brevets

(11) **EP 3 644 032 B1**

(12) **FASCICULE DE BREVET EUROPEEN**

(45) Date de publication et mention de la délivrance du brevet:
**01.07.2026 Bulletin 2026/27**

(21) Numéro de dépôt: **19205467.4**

(22) Date de dépôt: **25.10.2019**

(51) Classification Internationale des Brevets (IPC):
***G01J 11/00*** *(2006.01)*

(52) Classification Coopérative des Brevets (CPC):
**G01J 11/00**

(54) **SPECTROMÈTRE IMAGEUR ET DISPOSITIF AUTOCORRÉLATEUR OPTIQUE MONOCOUP COMPRENANT UN TEL SPECTROMÈTRE IMAGEUR**

BILDGEBENDER SPEKTROMETER UND OPTISCHE EINZELPUNKT-AUTOKORRELATIONSVORRICHTUNG, DIE EINEN SOLCHEN BILDGEBENDEN SPEKTROMETER UMFASST

IMAGING SPECTROMETER AND SINGLE-PULSE OPTICAL AUTOCORRELATOR DEVICE COMPRISING SUCH AN IMAGING SPECTROMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2018 FR 1859966**

(43) Date de publication de la demande:
**29.04.2020 Bulletin 2020/18**

(73) Titulaire: **Femto Easy**
**33600 Pessac (FR)**

(72) Inventeur: **DUBROUIL, Antoine**
**33400 TALENCE (FR)**

(74) Mandataire: **Plasseraud IP**
**104 Rue de Richelieu**
**CS92104**
**75080 Paris Cedex 02 (FR)**

(56) Documents cités:
**WO-A1-2017/037402 US-A1- 2015 219 495**

- **IAN A. WALMSLEY ET AL: "Characterization of ultrashort electromagnetic pulses", ADVANCES IN OPTICS AND PHOTONICS, vol. 1, no. 2, 15 April 2009 (2009-04-15), pages 308, XP055484183, DOI: 10.1364/AOP.1.000308**
- **PANASENKO D ET AL: "Single-shot generation of femtosecond laser pulse sonogram using two-photon conductivity in a silicon CCD", CONFERENCE ON LASERS AND ELECTRO-OPTICS. (CLEO 2002). TECHNICAL DIGEST. POSTCONFERENCE EDITION. LONG BEACH, CA, MAY 19 - 24, 2002; [TRENDS IN OPTICS AND PHOTONICS. (TOPS)], WASHINGTON, WA : OSA, US, 19 May 2002 (2002-05-19), pages 83 - 83, XP010606463, ISBN: 978-1-55752-706-6**
- **DMITRIY PANASENKO ET AL: "Single-shot sonogram generation for femtosecond laser pulse diagnostics by use of two-photon absorption in a silicon CCD camera", OPTICS LETTERS, vol. 27, no. 16, 15 August 2002 (2002-08-15), US, pages 1475, XP055670632, ISSN: 0146-9592, DOI: 10.1364/OL.27.001475**

EP 3 644 032 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

Domaine de l'invention

La présente invention est dans le domaine général de la spectroscopie, en particulier dans la mesure des caractéristiques de diverses sources de rayonnement électromagnétique.

Elle trouve des applications dans la mesure des impulsions lasers et notamment des impulsions lasers ultra-brèves, c'est-à-dire des impulsions ayant une durée de l'ordre de la picoseconde à la femtoseconde, surtout pour la mesure de leur durée, de leur profil temporel et spectral.

Elle vise un spectromètre imageur présentant une résolution améliorée et une compacité plus grande.

Elle concerne également un dispositif autocorrélateur optique monocoup résolu spectralement pour l'analyse d'une impulsion laser ultrabrève.

Arrière-plan technologique

Il est connu de nombreuses applications de la spectroscopie dans les milieux scientifiques, industriels et médicaux. Dans ces domaines, on connaît également de nombreuses applications des lasers ultrarapides.

A titre d'exemple, des impulsions laser ultra-brèves sont utilisées dans le domaine du micro-usinage (gravure, perçage, marquage, ...), notamment en micro-électronique ou dans l'horlogerie.

Ces impulsions laser ultra-brèves permettent ainsi de réaliser des gravures très précises et sans bavure, grâce à la puissance instantanée élevée délivrée dans chaque impulsion.

En chirurgie ophtalmique, les lasers femtosecondes sont mis en œuvre pour remodeler la courbure cornéenne de l'œil par la réalisation de découpes très précises et sans effet thermique sur la cornée.

Toutefois, ces applications demandent de maîtriser à la fois la quantité d'énergie et la puissance instantanée délivrée par chaque impulsion laser.

De nombreuses recherches ont donc été menées pour développer des dispositifs permettant de caractériser de manière fiable et rapide des impulsions laser ultra-brèves afin d'asseoir cette maîtrise.

On connaît ainsi des autocorrélateurs monocoup qui permettent avantageusement de mesurer une trace d'autocorrélation à partir d'une seule impulsion laser ultra-brève, laquelle permet de caractériser la forme et la largeur temporelle de l'impulsion.

Toutefois, les appareils optiques intégrant un autocorrélateur optique monocoup de l'état de l'art, nécessitent un espace conséquent, qui n'est pas toujours disponible.

En outre, un tel montage nécessite un ajustement en position et un alignement précis des différents éléments optiques constitutifs de cet autocorrélateur optique monocoup.

Ces opérations peuvent être longues et pénibles pour l'opérateur.

Par ailleurs, pour certaines applications scientifiques et industrielles, il est nécessaire de disposer de systèmes optiques capables de fournir des images à haute résolution dans un grand nombre de bandes de longueurs d'onde.

Un spectromètre imageur permet d'imager une fente d'entrée "bidimensionnelle" sur un détecteur d'image résolu suivant deux directions. La longueur de la fente d'entrée s'étend selon une première des directions du détecteur tandis que la dispersion créée par un réseau de diffraction sépare des images de la fente d'entrée dans une direction du détecteur orthogonale à la première. La séparation des images de la fente d'entrée dans la seconde direction permet d'enregistrer le contenu spectral de la lumière collectée au travers de cette fente d'entrée.

Ainsi une dimension du détecteur imageur contient des informations spatiales, tandis que l'autre dimension contient des informations spectrales.

On connaît des spectromètres présentant une configuration dite « de Czerny-Turner » comprenant une fente d'entrée, un élément de diffraction qui est un réseau de diffraction en réflexion plan, deux miroirs concaves ou toroïdaux et un photo-détecteur résolu spatialement suivant au moins une direction.

La mise en œuvre d'un tel réseau en réflexion impose néanmoins des contraintes géométriques au système optique. En effet, le premier miroir concave, dit de collimation, d'un tel spectromètre reçoit de la fente d'entrée, un faisceau de rayonnement laser sous un angle d'incidence élevé pour le renvoyer vers le réseau en réflexion.

Or, cet angle d'incidence élevé sur le premier miroir concave entraîne l'apparition d'aberrations optiques importantes.

Ces aberrations dégradent la résolution spatiale et spectrale du spectromètre, voir même détruisent totalement l'information dans certaines zones du plan d'imagerie.

De plus, le même phénomène se produit avec le deuxième miroir concave du spectromètre. Les aberrations optiques s'ajoutant, de plus en plus d'informations sont dès lors perdues.

Pour tenter de résoudre ces inconvénients, deux solutions ont été proposées dans l'art antérieur :

1. La mise en œuvre de miroirs concaves présentant de longues distances focales afin de réduire l'angle d'incidence, et donc les aberrations optiques. Toutefois, cela a pour inconvénient majeur de créer des systèmes optiques très encombrants. Néanmoins, la résolution spatiale est conservée dans ce cas.
2. La résolution spatiale est supprimée dès l'entrée du spectromètre afin de ne pas détruire l'information sur l'axe optique. Dans ce cas, un spectromètre compact est obtenu mais il n'est pas imageur et la résolution spectrale est moins élevée que dans le cas n°1. Egalement ce type de spectromètre utilise généralement un schéma Czerny-Turner croisé qui est moins performant en termes d'aberration et de résolution. Cependant, il présente l'avantage d'être plus compact.

Une autre problématique existe avec l'observation de décalages dans les longueurs d'onde des raies mesurées par le photo-détecteur, lesquels peuvent résulter d'un désalignement du faisceau lumineux incident, ce dernier n'étant pas parfaitement perpendiculaire à la fente d'entrée. Des exemples de l'état de la technique sont par ailleurs divulgués dans les documents WO2017037402; "Characterization of ultrashort electromagnetic pulses", Ian Walmsley et al., Optical Society of America, Advances in Optics and Photonics, 2009; "Single-shot generation of femtosecond laser pulse sonogram using two-photon conductivity in a silicon CCD", Panasenko et al., CLEO 2002; "Single-shot sonogram generation for femtosecond laser pulse diagnostics by use of two-photon absorption in a silicon CCD camera", Panasenko et al., Optics Letters, 2002; et US2015219495.

Selon les meilleures connaissances de la demanderesse, il n'existe pas de spectromètre imageur compact présentant une très haute résolution.

Il existe donc un besoin réel pour un spectromètre imageur dont la conception originale assure une compacité plus importante et une résolution améliorée.

Objet de l'invention

La présente invention vise un spectromètre imageur, simple dans sa conception et dans son mode opératoire, compact et économique, répondant aux inconvénients ci-dessus mentionnés.

Un objet de la présente invention est ainsi un spectromètre imageur à très haute résolution spatiale et spectrale, tel que défini dans la revendication 1.

La présente invention vise également un dispositif autocorrélateur optique monocoup équipé d'un tel spectromètre imageur, présentant une réduction significative du nombre de composants à installer et à aligner, et par conséquent, d'un alignement particulièrement aisé, tout en assurant une meilleure stabilité mécanique de ce dernier.

Elle vise encore un tel dispositif autocorrélateur optique monocoup résolu spectralement, sans aberration ou dans lequel les problèmes d'aberration sont significativement minimisés, car étant dépourvu de dispositif d'imagerie en amont du spectromètre imageur.

BREVE DESCRIPTION DE L'INVENTION

A cet effet, l'invention concerne un spectromètre imageur tel que défini dans la revendication 1.

La mise en œuvre d'un miroir d'extraction permet donc avantageusement de réaliser une incidence proche de zéro, mais non nulle, du rayonnement sur le miroir sphérique. Cette incidence est de préférence de l'ordre de 1°.

Il en résulte une réduction significative des aberrations optiques constatées avec les spectromètres de l'art antérieur.

Rappelons que mathématiquement, on entend par « angle d'incidence compris entre ]0, 8°] », un angle d'incidence strictement supérieur à 0° mais inférieur ou égal à 8°.

Dans différents modes de réalisation particuliers de ce spectromètre imageur, chacun ayant ses avantages propres et susceptibles de nombreuses combinaisons techniques possibles:

- ledit miroir d'extraction et ledit ensemble optique spectralement dispersif sont agencés par rapport audit miroir sphérique de sorte que ledit ensemble optique spectralement dispersif est placé à une distance du miroir sphérique qui est égale, ou sensiblement égale, à la distance focale de ce miroir sphérique.

On constate ainsi que cet ensemble optique spectralement dispersif, étant plus proche du foyer du miroir sphérique, les conditions de Gauss, ou l'approximation de Gauss, sont pratiquement atteintes. En d'autres termes, le F# (f-number) dans la direction spatiale associé à la lentille de focalisation est augmenté, ce qui permet d'améliorer la profondeur de champ dans la direction spatiale et de diminuer les aberrations sphériques. Il est dès lors avantageusement possible de mettre en œuvre des lentilles de courte focale. Avec une courte focale, la chromaticité de la lentille peut être compensée en inclinant le plan de détection du détecteur d'image pour détecter des profondeurs d'imagerie différentes en fonction de la position. Alternativement, ou en supplément, il est également possible de mettre en œuvre un moyen pour compenser le décalage spatial des points de focalisation en fonction de la longueur d'onde des rayons du faisceau et lié à la chromaticité de la lentille, encore appelé « focal shift ». Ce moyen de compensation du décalage peut par exemple être un prisme à coin (« wedge ») ou une lame de verre à faces parallèles ayant un indice de réfraction élevé.

La résolution du spectromètre est ainsi significativement améliorée.

- ledit ensemble optique spectralement dispersif comprend un réseau de diffraction en transmission.

Ledit réseau de diffraction en transmission est un réseau blazé, lequel est de préférence, agencé de sorte que l'ordre d'interférence non nul (ou l'ordre 1) est dirigé du côté dudit miroir sphérique.

Avantageusement, un tel mode de réalisation permet d'assurer la compacité du spectromètre imageur.

De préférence, ledit ensemble optique spectralement dispersif comprenant un réseau de diffraction en transmission et ledit ensemble optique spectralement dispersif comprenant un élément optique de focalisation, ledit élément optique de focalisation est placé au plus près dudit réseau de diffraction en transmission.

A titre purement illustratif, la distance séparant l'élément optique de focalisation du réseau est de l'ordre de 1 mm à 10 mm selon l'angle de blaze du réseau. Le réseau peut être un carré de 12,7 par 12,7 mm.

De manière avantageuse, cet élément optique de focalisation est une lentille de focalisation ayant une distance focale comprise entre 25 mm et 75 mm. De préférence, cette lentille de focalisation étant une lentille achromatique ou une simple lentille réalisé dans un matériau présentant une faible dérive chromatique (par exemple : $CaF_2$ ou $MgF_2$ dans l'ultraviolet (UV)).

- ledit ensemble optique spectralement dispersif comprenant un élément optique de focalisation, ledit élément optique de focalisation et ledit miroir sphérique sont configurés de sorte que le grandissement $\gamma$ est strictement inférieur à un (1).

Un tel grandissement permet d'améliorer le contraste et l'image de la fente apparaît également plus petite sur le détecteur d'image. Or, comme l'image de la largeur de la fente sur le détecteur d'image impose la résolution spectrale du spectromètre imageur, on obtient une meilleure résolution spectrale. Il est ainsi possible de mesurer une gamme large tout en conservant la résolution spectrale. Par ailleurs, avec les spectrographes de l'état de l'art, le grandissement est typiquement supérieur à 1, et le grandissement spatiale et spectrale n'est pas le même.

- ledit miroir sphérique a un diamètre d'ouverture H strictement supérieur à la hauteur h de ladite fente d'entrée.

Une telle dimension du miroir sphérique par rapport à la hauteur de la fente d'entrée placée au foyer F du miroir sphérique, permet avantageusement de conserver l'ensemble des informations du faisceau de rayonnement laser incident même lorsque le faisceau incident est divergent.

Pour ne pas perdre d'information sur le faisceau, il faut tout d'abord que le diamètre du faisceau à caractériser soit, au niveau de la fente d'entrée, inférieur ou égal à la hauteur effective $h_{eff}$ de cette fente d'entrée, avec $h_{eff}$ = Y/gamma où Y la dimension du photodétecteur dans la direction spatiale et gamma ($\gamma$) le grandissement du spectromètre imageur. Bien entendu, il faut également que $h_{eff}$ soit inférieure ou égale à h.

Ensuite, pour un faisceau de divergence théta, il faut H supérieure ou égale à 2 x f x tan(theta/2) + $h_{eff}$.

Ou encore, si on prend comme critère, le système d'imagerie qui fait l'image sur la fente d'entrée d'un objet à caractériser placé en amont du spectromètre imageur, il faut :

H supérieure ou égale à F-number/f + $h_{eff}$ avec F-number encore appelé le nombre d'ouverture ou encore H supérieure ou égale à n/(2*N.O.*f) + $h_{eff}$ avec n = 1 dans l'air et N.O. l'ouverture numérique du système optique.

Dans l'invention, le spectromètre imageur comporte un cache interposé entre ladite fente d'entrée et ledit miroir sphérique pour occulter partiellement ledit miroir sphérique.

Seule une partie du faisceau de rayonnement laser est alors réfléchie par le miroir sphérique. De manière avantageuse, ce cache est configuré et agencé de sorte que seule la partie centrale dudit miroir sphérique permet d'assurer la réflexion du faisceau de rayonnement laser. Cette partie centrale du miroir sphérique recevant un faisceau de rayonnement laser présentant un alignement exact avec la fente d'entrée, c'est-à-dire perpendiculaire à celle-ci, la réflexion sur le miroir sphérique de cette seule portion du faisceau permet d'une part, d'éviter le décalage des raies spectrales mesurées et d'obtenir ainsi une précision inférieure strictement à 0,1 nm malgré la compacité du spectromètre imageur, et d'autre part, d'améliorer la résolution du spectromètre imageur.

Un tel cache permet également, de manière avantageuse, d'imposer une dimension de faisceau horizontale qui soit faible, et ainsi d'utiliser le miroir sphérique de manière la plus efficiente avec un angle d'incidence de l'ordre de 1° malgré une focale courte.

De manière avantageuse, ce cache est amovible. En effet, lorsque l'on cherchera à mesurer des longueurs d'onde très grandes, la dimension du faisceau sur le miroir sphérique devient importante et donc le cache devient grand aussi. Dans ce cas, il convient dès lors de séparer la fonctionnalité d'alignement de la fonctionnalité déterminant le diamètre du faisceau. Il peut donc y avoir un cache fixe et un cache amovible qui est retiré après l'alignement.

La largeur e de l'ouverture du cache est avantageusement donnée par la formule suivante :

$$(\lambda_{max} \text{ x } F / a) < e < (4 \text{ x } \lambda_{min} \text{ x } F / a).$$

où $\lambda_{max}$ est la longueur d'onde la plus longue à mesurer,
$\lambda_{min}$ est la longueur d'onde la plus courte à mesurer, F est la focale du miroir sphérique et a la largeur de la fente d'entrée.

Dans un mode de réalisation particulier du spectromètre imageur, le détecteur d'image résolu suivant deux directions peut comprendre un capteur d'images CMOS (« Complementary Metal Oxide Semiconductor ») ou un capteur d'image CCD (« Charge Coupled Device »).

Les sites photosensibles du détecteur d'image sont avantageusement espacés régulièrement sur une surface plane. Par site photosensible, on entend un site adapté pour transformer un nombre de photons incidents sur sa surface en un nombre d'électrons avec une efficacité quantique QE dépendante de la longueur d'onde.

Dans un mode de réalisation particulier du spectromètre imageur, le détecteur d'image résolu suivant deux directions est basé sur un semi-conducteur silicium.

La mise en œuvre d'un tel détecteur d'image permet de bénéficier des avantages des capteurs à base de silicium (absorption linéaire de 250 à 1100 nm). Ces derniers sont les plus aboutis technologiquement à ce jour. En effet, il s'agit de la gamme spectrale de la vision humaine (400 - 750 nm) et donc ils sont utilisés de manière intensive pour de très diverses applications (vision industrielle, photographie, smartphones, télésurveillance...). Les cameras équipées de ce type capteur sont les plus répandues sur le marché, et donc fabriquées en extrêmement grande quantité, ce qui permet d'atteindre d'excellents rapports qualité-prix. En effet, les capteurs silicium modernes permettent d'atteindre des résolutions supérieures à 20 Mpx, pour des tailles de pixels minimales de l'ordre du micron et des surfaces optiques pouvant faire quelques centimètres. Egalement, la technologie des capteurs silicium étant très aboutie, leur performance sont extrêment bonnes (dynamique, rapport signal sur bruit, uniformité de la réponse des pixels...). Le bénéfice d'utiliser ces capteurs dans la gamme d'absorption non-linéaire pour remplacer les capteurs InGaAs utilisés aujourd'hui dans la gamme SWIR (900 - 2600 nm) est donc extrêmement élevé. En effet, les résolutions des capteurs InGaAs sont limitées à 328 kpx et des surface optiques pouvant difficilement atteindre le centimètre.

La mise en œuvre de capteurs à base de silicium nécessite l'utilisation d'une source de lumière laser ultrarapide dont la longueur d'onde est comprise dans la plage de longueurs d'onde [1120 - 2600 nm] et dont l'intensité crête est adaptée pour générer dans le détecteur d'image de l'absorption à 2 photons.

La présente invention concerne encore un dispositif autocorrélateur optique monocoup résolu spectralement pour analyser une impulsion laser ultra-brève, comprenant un spectromètre imageur tel que décrit précédemment.

Dans un mode de réalisation particulier de ce dispositif autocorrélateur optique monocoup résolu spectralement, il est constitué de, ou limité aux composants suivants :

a) un séparateur de polarisation pour séparer angulairement un faisceau de rayonnement laser incident de fréquence optique fondamentale ($\omega$), en deux faisceaux de rayonnement laser de fréquence fondamentale ($\omega$) et de polarisations linéaires orthogonales entre elles, lesdits deux faisceaux formant un angle $\alpha$ entre eux en sortie dudit séparateur, ledit angle $\alpha$ étant non nul de sorte que lesdits faisceaux se recouvrent au moins partiellement en sortie dudit séparateur,

b) un cristal non linéaire de type II, c'est-à-dire qui permet de générer un rayonnement à $2\omega$ à partir de deux faisceaux de même polarisation perpendiculaires (doublage avec une seule polarisation impossible), ledit cristal non linéaire étant agencé pour recevoir lesdits faisceaux, issus dudit séparateur, en recouvrement au moins partiel de manière à générer en sortie dudit cristal un seul faisceau de rayonnement laser de fréquence harmonique ($2\omega$), lequel est une trace d'autocorrélation d'ordre deux ayant une fréquence optique $2\omega$,

c) au moins un dispositif de filtrage spectral configuré pour faire passer sélectivement ledit faisceau de rayonnement laser de fréquence harmonique ($2\omega$) tout en bloquant lesdits faisceaux de rayonnement laser de fréquence fondamentale ($\omega$),

d) ledit cristal non linéaire, ledit au moins un dispositif de filtrage spectral et ledit spectromètre imageur étant agencés pour détecter une trace d'autocorrélation monocoup de type intensimétrique d'ordre deux à la fréquence optique double ($2\omega$) résolue spectralement.

Ce dispositif autocorrélateur optique monocoup est compact en ce qu'il est uniquement composé des composants ci-avant mentionnés, tout assurant une mesure rapide, aisée et précise de la fonction d'autocorrélation en intensité résolue spectralement d'une impulsion laser ultra-brève, telle qu'une impulsion picoseconde ou femtoseconde.

L'impulsion laser ultrabrève que l'on cherche à analyser est polarisée linéairement à 45 degrés des axes du séparateur de polarisation afin de répartir l'énergie de manière égale sur chaque axe de polarisation. A défaut, on placera en amont du dispositif autocorrélateur, un moyen pour polariser linéairement la polarisation de ladite impulsion à 45 degrés des axes du séparateur de polarisation.

De manière avantageuse, la génération de seconde harmonique activée par polarisation croisée au moyen d'un cristal optique non linéaire de type II permet de générer un unique faisceau de rayonnement laser à la fréquence optique ($2\omega$), lequel se propage suivant l'axe optique du faisceau laser incident, et par conséquent, de s'affranchir des faisceaux de rayonnement laser à la fréquence optique ($2\omega$) se propageant selon les directions des faisceaux dits répliqués, lesquels sont encore appelés « faisceaux latéraux doublés ».

Il n'est ainsi plus nécessaire de disposer d'un filtre spatial tel qu'un iris, pour bloquer les faisceaux latéraux doublés afin de détecter une trace d'autocorrélation monocoup de type intensimétrique d'ordre deux, résolue spectralement.

Un tel montage optique confère ainsi une grande compacité et simplicité au dispositif autocorrélateur optique monocoup de l'invention. En particulier, étant dépourvu de dispositif de formation d'image tel qu'une lentille, il est particulièrement aisé à aligner.

Toutefois, l'absence de dispositif de formation d'image requiert un design original du dispositif autocorrélateur optique monocoup pour conserver la résolution de ce dernier. Cet objectif est ici atteint en plaçant le la fente d'entrée du spectromètre imageur au plus près du plan de conversion de fréquence, c'est-à-dire de la face de sortie du cristal non linéaire de type II.

De manière avantageuse, il n'y a ainsi aucun alignement à réaliser dans le dispositif autocorrélateur optique monocoup et il suffit simplement d'introduire l'impulsion laser ultra-brève à analyser.

On entend par « en sortie dudit séparateur », à la sortie ou au voisinage de la face de sortie du séparateur de polarisation.

On entend par « cristal non linéaire de type II », un cristal configuré pour générer un faisceau de seconde harmonique ($2\omega$) à partir de faisceaux incidents à la fréquence optique fondamentale ($\omega$) et à polarisations croisées ($o + e \rightarrow e$ ou $o$).

Dans différents modes de réalisation particuliers de ce dispositif autocorrélateur optique monocoup résolu spectralement, chacun ayant ses avantages propres et susceptibles de nombreuses combinaisons techniques possibles:

- ledit au moins un dispositif de filtrage est un filtre spectral non résolu spatialement, i.e. un filtre spectral assurant un filtrage uniforme quel que soit la position du faisceau sur le filtre.

De manière avantageuse, un filtre spectral non résolu spatialement permet d'absorber en partie la puissance du faisceau de rayonnement laser à la fréquence optique fondamentale ($\omega$).

- ledit au moins un dispositif de filtrage est placé entre ledit cristal non linéaire et ledit spectromètre imageur ou est directement placé dans ledit spectromètre imageur, par exemple entre la fente d'entrée et ledit miroir sphérique.

Selon une première variante du dispositif autocorrélateur de l'invention, ledit au moins un dispositif de filtrage étant placé entre ledit cristal non linéaire et ledit spectromètre imageur, ledit dispositif est un élément préassemblé, au moins ledit cristal non linéaire de type II et ledit au moins un dispositif de filtrage spectral étant en contact optique.

De manière avantageuse, l'élément pré-assemblé est constitué du séparateur de polarisation, du cristal non linéaire d'ordre II et dudit au moins un dispositif de filtrage spectral.

Selon une seconde variante du dispositif autocorrélateur de l'invention, ledit au moins un dispositif de filtrage étant placé entre ledit cristal non linéaire et ledit spectromètre imageur, l'ensemble constitué dudit séparateur de polarisation, dudit cristal non linéaire de type II et dudit au moins un dispositif de filtrage spectral sont placés dans une configuration en ligne en étant accolés.

Ce montage assure avantageusement une compacité importante au dispositif autocorrélateur optique monocoup.

Dans ces deux variantes de réalisation, ledit cristal non linéaire est placé au plus à une distance d de la fente d'entrée dudit spectromètre imageur, d étant compris entre ]0, 5] mm, de préférence entre ]0, 2] mm.

Selon une troisième variante de réalisation du dispositif autocorrélateur de l'invention, ledit au moins un dispositif de filtrage étant directement placé dans ledit spectromètre imageur, la fente d'entrée du spectromètre imageur est accolée audit cristal non linéaire de type II, de préférence, ce dernier étant lui-même accolé audit séparateur de polarisation.

- ledit séparateur de polarisation est choisi dans le groupe comprenant un prisme de Wollaston, un prisme de babinet, un prisme de Rochon ou autre,
- ledit cristal non linéaire a une épaisseur comprise entre 5 microns, pour une impulsion femtoseconde et quelques 500 microns pour une impulsion picoseconde.

La présente invention concerne encore un dispositif autocorrélateur optique monocoup pour analyser une impulsion laser ultra-brève, ladite impulsion laser ultra-brève présentant un front d'onde collimaté et ayant une fréquence optique fondamentale ($\omega$).

Selon l'invention, ce dispositif est constitué de :

a) un composant optique à division de front d'onde disposé pour recevoir ledit front d'onde collimaté et pour diviser spatialement ce front d'onde collimaté en un premier front d'onde divisé se propageant suivant une première direction et en un second front d'onde divisé se propageant suivant une seconde direction formant un angle non nul avec la première direction,

b) un cristal optique non linéaire de type I, ledit cristal non linéaire étant agencé pour recevoir lesdits fronts d'onde, issus dudit composant optique à division de front d'onde, en recouvrement au moins partiel, ledit cristal optique non linéaire de type I ayant une face de sortie,

c) au moins un dispositif de filtrage spectral placé entre ledit cristal non linéaire de type I et un spectromètre imageur tel que décrit précédemment, et

d) la face de sortie dudit cristal optique non linéaire étant placée à proximité de la fente d'entrée de ce spectromètre imageur, ledit cristal non linéaire, ledit au moins un dispositif de filtrage spectral et ledit spectromètre étant agencés pour détecter une trace d'autocorrélation monocoup de type interférométrique d'ordre deux à la fréquence optique double (2ω).

Avec un tel dispositif, on mesure ainsi qu'une trace d'autocorrélation monocoup de type interférométrique d'ordre deux résolue spectralement.

Le composant optique à division de front d'onde peut, par exemple, être un bi-prisme ou un bi-miroir. Pour l'analyse d'impulsions courtes, on préférera le bi-miroir. A titre d'exemple, ce bi-miroir pourrait être obtenu avec deux miroirs cylindriques pour focaliser, sur le cristal optique non linéaire d'ordre I, la fente d'entrée recevant directement un premier front d'onde se propageant selon une première direction et un second front d'onde se propageant selon une seconde direction formant un angle non nul avec la première direction.

Ce composant optique à division de front d'onde peut être réflectif ou en transmission. Il peut également présenter une courbure cylindrique afin de focaliser les deux fronts d'onde sur une ligne au niveau de la fente.

De préférence, au moins ledit cristal non linéaire de type I et ledit au moins un dispositif de filtrage spectral forment un ensemble préassemblé. De manière avantageuse, cet ensemble préassemblé contient également le composant optique à division de front d'onde. Toutefois, dans le cas d'un bi-prisme, ce dernier ne peut être accolé que si on cherche à mesurer des impulsions très longues (de l'ordre de 300 fs à 15 ps). Sinon, il faut que le bi-prisme soit placé à une certaine distance du cristal optique non linéaire d'ordre I.

Dans le cas d'un bi-miroir, il faut que le bi-miroir dirige le faisceau de rayonnement dans le spectromètre tout en étant placé à une certaine distance.

Il est ainsi possible d'interchanger cet ensemble avec un ensemble préassemblé constitué du séparateur de polarisation, du cristal optique non linéaire de type II et dudit au moins un dispositif de filtrage spectral, décrit plus haut pour obtenir de manière très aisée, soit une trace d'autocorrélation monocoup de type interférométrique d'ordre deux, résolue spectralement, soit une trace d'autocorrélation monocoup de type intensimétrique d'ordre deux, résolue spectralement.

De manière préférentielle, ledit cristal non linéaire est placé au plus à une distance d de la fente d'entrée dudit spectromètre, d étant compris entre ]0, 5] mm, c'est-à-dire d est compris entre 0 exclu et 5 mm, et encore mieux entre ]0, 2] mm.

Avantageusement, on pourra adjoindre à ce dispositif autocorrélateur, un système de traitement du signal configuré pour analyser la trace d'autocorrélation interférométrique monocoup d'ordre deux à la fréquence optique double (2ω) et pour en déduire une mesure de durée, de profil temporel et de spectre d'impulsion laser ultra-brève.

La présente invention concerne encore l'utilisation du spectromètre imageur tel que décrit précédemment ou du dispositif autocorrélateur optique monocoup tel que décrit précédemment avec une source de lumière laser ultrarapide dont la longueur d'onde est comprise dans la plage de longueurs d'onde [1120 - 2600 nm] et dont l'intensité crête est adaptée pour générer dans le détecteur d'image de l'absorption à 2 photons, le détecteur d'image étant basé sur un semi-conducteur silicium.

Ce détecteur d'image peut ainsi comporter un substrat en silicium.

BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels:

- la Figure 1 est une représentation schématique d'un spectromètre imageur selon un premier mode de réalisation particulier de la présente invention ;
- la Figure 2 est une vue de face du cache du spectromètre imageur de la Fig. 1 ;
- la Figure 3 représente schématiquement un dispositif autocorrélateur optique monocoup équipé d'un spectromètre imageur de la Fig. 1, selon un mode de réalisation de la présente invention ;
- la Figure 4 est une représentation schématique d'un spectromètre imageur selon un deuxième mode de réalisation particulier de la présente invention ;
- la Figure 5 est une représentation schématique d'un spectromètre imageur selon un troisième mode de réalisation particulier de la présente invention ;

DESCRIPTION DETAILLEE DE MODE DE REALISATION DE L'INVENTION

Tout d'abord, on note que les figures ne sont pas à l'échelle.

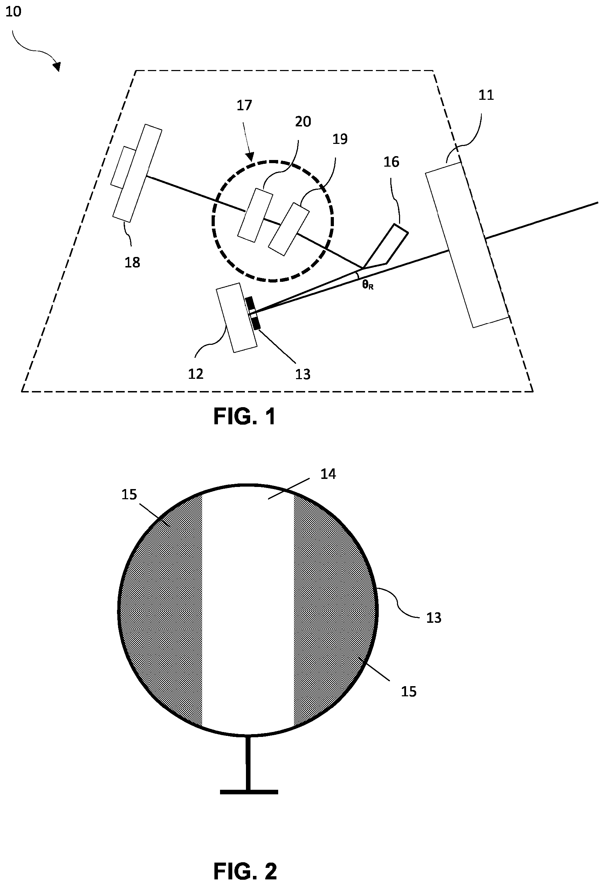

Les Figures 1 et 2 représentent schématiquement un spectromètre imageur selon un mode de réalisation particulier de la présente invention.

Ce spectromètre imageur 10 comprend une fente d'entrée 11 permettant de recevoir un rayonnement sur une plage de longueurs d'onde. A titre purement illustratif, cette fente d'entrée 11 présente une largeur de fente comprise de 10 à quelques dizaines de μm.

Le rayonnement traversant la fente d'entrée 11 est réfléchi par un miroir sphérique 12 de foyer F placé en regard de cette fente d'entrée 11, cette dernière étant placée au foyer F de ce miroir sphérique 12.

De manière avantageuse, le rayonnement est réfléchi sur le miroir sphérique 12 sous un angle $\theta_R$ proche de zéro mais non nul, ici de l'ordre de 1° afin de limiter les aberrations optiques géométriques.

Un cache 13 permettant d'occulter les parties latérales du miroir sphérique 12 est placé devant et accolé au miroir sphérique 12 pour laisser passer uniquement une partie centrale du rayonnement incident. Cette partie centrale du miroir sphérique 12 reçoit ainsi un rayonnement présentant un alignement exact avec la fente d'entrée 11, c'est-à-dire perpendiculaire à celle-ci.

Ce cache 13 est ici réalisé en aluminium et comporte une fente verticale 14 délimitée par deux parois 15 pleines disposées latéralement à cette fente.

Un miroir d'extraction 16, encore appelé en anglais « pick-off mirror », permet de diriger le rayonnement réfléchi par le miroir sphérique 12 vers un ensemble optique spectralement dispersif 17.

Cet ensemble optique spectralement dispersif 17 permet de disperser ledit rayonnement en fonction de la longueur d'onde et le focaliser dans un plan de détection d'un détecteur d'image 18 qui est ici une caméra CCD résolue selon deux directions et fonctionnant à une fréquence de plusieurs dizaines à plusieurs centaines d'images/seconde. Elle est bien entendu adaptée en fonction de la gamme spectrale de l'impulsion à mesurer.

Cet ensemble optique 17 comprend un réseau blazé de diffraction 19 en transmission et une lentille 20 de focalisation placé à proximité immédiate du réseau blazé de diffraction 19. Cette lentille 20 de focalisation est ici une lentille achromatique. Sa focale f est ici strictement inférieure à 100 mm.

De manière avantageuse, ce miroir d'extraction 16 et cet ensemble optique spectralement dispersif 17 sont agencés par rapport audit miroir sphérique 12 de sorte que la lentille 20 de focalisation est placée, ou sensiblement placée, à une distance du miroir sphérique 12 qui est égale, ou sensiblement égale, à la distance focale de ce miroir sphérique 12.

Le réseau de diffraction 19 en transmission est agencé de sorte que l'ordre d'interférence non nul (ou l'ordre 1) est dirigé du côté dudit miroir sphérique 12.

L'ensemble du spectromètre imageur est donc configuré pour réduire les aberrations optiques et améliorer ainsi sa résolution, et présenter une compacité accrue par rapport aux spectromètres de l'état de l'art.

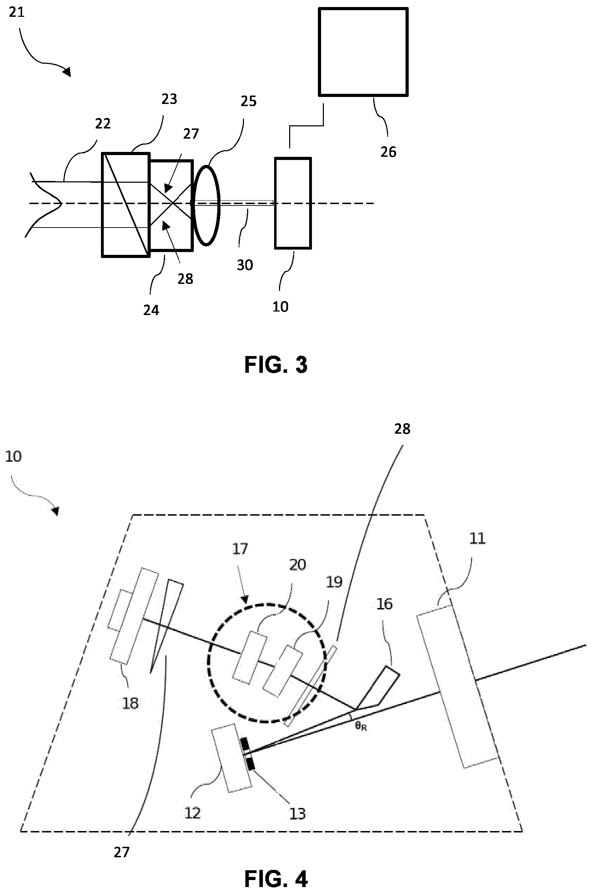

La Figure 3 représente schématiquement un dispositif autocorrélateur optique monocoup équipé d'un spectromètre imageur 10 tel que décrit précédemment selon un mode de réalisation de la présente invention.

Les éléments de la Figure 3 portant les mêmes références que ceux des Figures 1 et 2 représentent les mêmes objets, lesquels ne seront pas décrits de nouveau ci-après.

La face de sortie du cristal non linéaire de type II est placée avantageusement à proximité immédiate de la fente d'entrée 11 du spectromètre imageur 10.

Ce dispositif autocorrélateur optique monocoup permet de mesurer la durée d'une impulsion laser ultra-brève sur la base d'une détection d'une autocorrélation intensimétrique résolue spectralement.

Par la suite, on considérera une impulsion laser ultra-brève de fréquence fondamentale ($\omega$) telle qu'une impulsion laser générée par une source laser femtoseconde.

Ce dispositif autocorrélateur 21 est constitué des seuls composants suivants :

- un séparateur 23 de polarisation,
- un cristal non linéaire 24 permettant un accord de phase de type II,
- un dispositif 25 de filtrage spectral, et
- un spectromètre imageur 10.

Le détecteur d'image 18 du spectromètre imageur 10 est avantageusement relié à une unité de traitement 26 comportant un processeur et, de préférence, un moyen de visualisation tel qu'un écran pour afficher les données traitées par ladite unité de traitement.

L'unité de traitement 26 connecté au détecteur d'image traite les mesures d'autocorrélation intensimétrique d'ordre deux résolue spectralement.

Les éléments de ce dispositif autocorrélateur 21 sont montés en ligne en étant reçus dans un boîtier. L'ensemble formé par le séparateur de polarisation 23, le cristal non linéaire 24 de type II et le filtre spectral 25 sont accolés. La fente d'entrée 11 du spectromètre imageur 10 est avantageusement placée à proximité immédiate du filtre spectral 25, ce qui confère à l'ensemble une grande compacité. En outre, en disposant ainsi la fente d'entrée 11 du spectromètre imageur 10 au plus près de la face de sortie du cristal non linéaire 24 de type II, voire en l'accolant à cette face de sortie du critstal, on garantit le maintien de la résolution du dispositif autocorrélateur.

Le faisceau incident de rayonnement laser présente de manière avantageuse une distribution en intensité présentant une symétrie axiale par rapport à l'axe optique de propagation de ce faisceau.

Le séparateur de polarisation 23 qui est ici un prisme de Wollaston, reçoit le faisceau incident et sépare angulairement ce dernier en deux faisceaux de rayonnement laser de fréquence fondamentale ($\omega$) et de polarisations linéaires orthogonales entre elles.

En sortie de ce séparateur, un premier faisceau se propage suivant une première direction inclinée par rapport à l'axe optique du faisceau incident et un second faisceau se propage suivant une seconde direction inclinée par rapport à l'axe optique du faisceau incident. Les première et seconde directions sont inclinées de manière symétrique par rapport à l'axe optique.

Ce séparateur de polarisation 23 est ici configuré de sorte que l'angle $\alpha$ non nul formé entre les deux faisceaux ainsi générés assure le recouvrement au moins partiel de ces faisceaux dans le cristal optique non linéaire de type II qui est accolé à la face de sortie du séparateur de polarisation 23.

Les faisceaux 27, 28 ainsi générés sont appelés les répliques du faisceau incident, ou encore faisceaux répliqués.

Ce cristal non linéaire 24 de type II est configuré pour assurer un doublage de fréquence du faisceau à la

fréquence fondamentale $\omega$. Ce cristal optique non linéaire 24 est par exemple un cristal BBO taillé avec un angle d'accord de phase $\theta$ = 42,4° ce qui permet de générer un doublage en fréquence pour une fréquence fondamentale $\omega$ correspondant à une longueur d'onde $\lambda$ de 800 nm.

En sortie du cristal optique 24 non linéaire de type II, on obtient une trace d'autocorrélation de l'impulsion laser incidente doublée en fréquence, aussi appelée trace d'autocorrélation d'ordre deux ayant une fréquence optique $2\omega$. Cette trace d'autocorrélation se propage le long de l'axe optique du faisceau incident.

Les deux faisceaux répliqués à la fréquence optique fondamentale $\omega$ étant également présents en sortie du cristal optique non linéaire de type II, un filtre spectral 25 est placé entre ce cristal optique non linéaire de type II et le spectromètre imageur 10 pour filtrer ces deux faisceaux répliqués et ne laisser passer que ledit faisceau de rayonnement laser de fréquence harmonique ($2\omega$).

Ce filtre spectral 25 est ici accolé à la face de sortie du cristal optique non linéaire de type II. A titre d'exemple, ce filtre spectral 25 est ici formé d'un filtre coloré tel qu'un verre coloré de type BG40.

La Figure 4 est une représentation schématique d'un spectromètre imageur selon un deuxième mode de réalisation particulier de la présente invention.

Les éléments de la Figure 4 portant les mêmes références que ceux des Figures 1 et 2 représentent les mêmes objets, lesquels ne seront pas décrits de nouveau ci-après.

Le spectromètre imageur de la Figure 4 diffère de celui représenté aux Figs. 1 et 2 en ce qu'il comprend un moyen de compensation du décalage spatial des points de focalisation en fonction de la longueur d'onde des rayons du faisceau.

Le principe consiste à introduire un prisme à coin 27 présentant un indice de réfraction important tel qu'en verre d'indice élevé, par exemple de l'ordre de 1.7 ou 1.8. A titre purement illustratif, il pourrait s'agir de SF11.

L'introduction d'un tel prisme à coin 27 permet de redresser les rayons lumineux lors de la traversée du premier dioptre, puis à la sortie de celui-ci, ces rayons lumineux reprennent le même angle et la même focalisation. On se retrouve donc avec le même foyer mais placé plus loin, et c'est justement ce qu'on cherche pour les courtes longueurs d'onde les plus courtes (dans le domaine de l'ultraviolet - UV) qui focalisent plus "rapidement" à cause de l'indice plus élevé. Cette compensation est d'autant plus efficace que la longueur d'onde du faisceau est courte puisque l'indice augmente.

Deux méthodes sont proposées pour compenser ce décalage spatial des points de focalisation :

- méthode binaire : on met un prisme à coin 27 seulement du côté des longueurs d'onde les plus courtes. Un inconvénient de cette méthode est l'apparition d'une petite figure de diffraction au niveau de l'arête du prisme à coin qu'il faut compenser avec le logiciel d'acquisition de données.
- méthode améliorée : on met en œuvre un prisme à coin 27, encore appelé lame à faces non parallèles - "wedge", avec son arête placée du côté des longueurs d'onde les plus longues et sa base placée du côté des longueurs d'onde les plus courtes. Dans ce cas, on peut choisir un prisme à coin 27 dont l'angle du sommet est plus moins important pour compenser au mieux le décalage spatial des points de focalisation. De plus, le prisme à coin 27 diffracte dans le sens du réseau et donc augmente encore la résolution spectrale pour un réseau donné.

On peut encore déplacer en translation ce prisme à coin 27 dans la direction spectrale afin de chercher le positionnement optimum de compensation.

Le spectromètre imageur comporte également une lame de compensation d'aberrations sphériques 28.

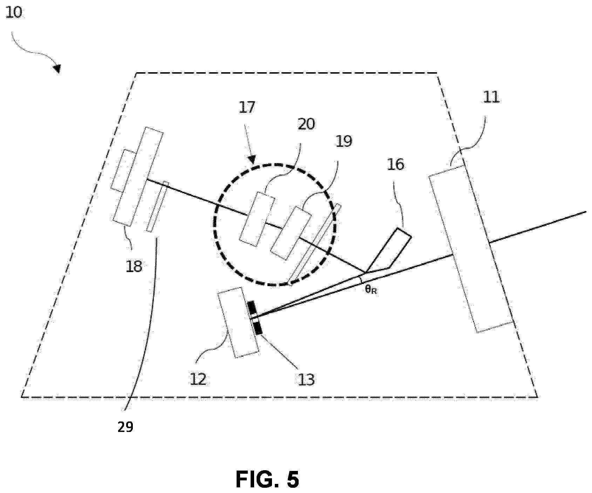

La Figure 5 est une représentation schématique d'un spectromètre imageur selon un deuxième mode de réalisation particulier de la présente invention.

Les éléments de la Figure 5 portant les mêmes références que ceux de la Fig. 4 représentent les mêmes objets, lesquels ne seront pas décrits de nouveau ci-après.

Le spectromètre imageur de la Figure 5 diffère de celui représenté à la Fig. 4 en ce que le prisme à coin 27 a été remplacé par une lame 29 de compensation rectangulaire, c'est-à-dire à faces parallèles, d'un indice de réfraction élevé et placée du côté des longueurs d'onde les plus courtes (méthode binaire).

## Revendications

**1.** Spectromètre imageur (10) comprenant

- une fente d'entrée (11) permettant de recevoir un rayonnement sur une plage de longueurs d'onde,
- un détecteur d'image (18) résolu suivant deux directions,
- un miroir sphérique (12) de foyer F placé en regard de ladite fente d'entrée (11),
- un ensemble optique spectralement dispersif (17) pour disperser ledit rayonnement en fonction de la longueur d'onde et le focaliser dans un plan de détection du détecteur d'image,
- un miroir d'extraction (16) pour diriger le rayonnement provenant du miroir sphérique (12) sur l'ensemble optique spectralement dispersif (17), ladite fente d'entrée (11) et ledit miroir sphérique (12) étant agencés de sorte que le rayonnement est incident sur ledit miroir sphérique (12) à un angle d'incidence compris entre ]0, 8°], encore mieux ]0, 2°] et de manière encore plus préférentielle autour de ou égal à 1°, et
- un cache (13) interposé entre ladite fente d'entrée (11) et ledit miroir sphérique (12), ce cache étant placé devant et accolé au miroir sphérique de sorte que seule la partie centrale du miroir sphérique réfléchisse le rayonnement incident, ce cache comportant une fente (14) délimitée par deux parois pleines (15), cette fente étant placée perpendiculairement à la fente d'entrée.

**2.** Spectromètre imageur selon la revendication 1, **caractérisé en ce que** ledit miroir d'extraction (16) et ledit ensemble optique spectralement dispersif (17) sont agencés par rapport audit miroir sphérique (12) de sorte que ledit ensemble optique spectralement dispersif (17) est placé à une distance du miroir sphérique (12) qui est égale, ou sensiblement égale, à la distance focale de ce miroir sphérique (12).

**3.** Spectromètre imageur selon la revendication 1 ou 2, **caractérisé en ce que** ledit ensemble optique spectralement dispersif (17) comprend un réseau de diffraction (19) en transmission.

**4.** Spectromètre imageur selon la revendication 3, **caractérisé en ce que** ledit ensemble optique spectralement dispersif (17) comprenant un élément optique (20) de focalisation, ledit élément optique (20) de focalisation est placé au plus près dudit réseau de diffraction (19) en transmission.

**5.** Spectromètre imageur selon l'une quelconque des revendications précédentes, **caractérisé en ce que** ledit ensemble optique spectralement dispersif (17) comprend un élément optique (20) de focalisation qui est une lentille ayant une distance focale comprise entre 25 mm et 75 mm, ladite lentille étant de préférence achromatique.

**6.** Spectromètre imageur selon l'une quelconque des revendications précédentes, **caractérisé en ce que** ledit ensemble optique spectralement dispersif (17) comprenant un élément optique (20) de focalisation qui est une lentille, ledit spectromètre comporte un moyen pour compenser le décalage spatial des points de focalisation en fonction de la longueur d'onde des rayons du faisceau.

**7.** Spectromètre imageur selon l'une quelconque des revendications précédentes, **caractérisé en ce que** ledit ensemble optique spectralement dispersif (17) comprenant un élément optique de focalisation, ledit élément optique de focalisation et ledit miroir sphérique (12) sont configurés de sorte que le grandissement $\gamma$ est strictement inférieur à un (1).

**8.** Spectromètre imageur selon l'une quelconque des revendications précédentes, **caractérisé en ce que** ledit miroir sphérique (12) a un diamètre d'ouverture H strictement supérieur à la hauteur h de ladite fente d'entrée (11).

**9.** Spectromètre imageur selon l'une quelconque des revendications précédentes, **caractérisé en ce que** le détecteur d'image résolu suivant deux directions est basé sur un semi-conducteur silicium.

**10.** Dispositif autocorrélateur optique monocoup pour analyser une impulsion laser ultra-brève, comprenant un spectromètre imageur (10) selon l'une quelconque des revendications 1 à 9.

**11.** Dispositif autocorrélateur selon la revendication 10, **caractérisé en ce qu'**en plus dudit spectromètre imageur (10), ce dispositif autocorrélateur comporte uniquement :

a) un séparateur de polarisation pour séparer angulairement un faisceau de rayonnement laser incident de fréquence optique fondamentale ($\omega$), en deux faisceaux de rayonnement laser de fréquence fondamentale ($\omega$) et de polarisations linéaires orthogonales entre elles, lesdits deux faisceaux formant un angle $\alpha$ entre eux en sortie dudit séparateur, ledit angle $\alpha$ étant non nul de sorte que lesdits faisceaux se recouvrent au moins partiellement en sortie dudit séparateur,
b) un cristal non linéaire de type II, ledit cristal non linéaire étant agencé pour recevoir lesdits faisceaux, issus dudit séparateur, en recouvrement au moins partiel de manière à générer en sortie dudit cristal un seul faisceau de rayonnement laser de fréquence harmonique ($2\omega$), lequel est une trace d'autocorrélation d'ordre deux ayant une fréquence optique $2\omega$,
c) au moins un dispositif de filtrage spectral configuré pour faire passer sélectivement ledit faisceau de rayonnement laser de fréquence harmonique ($2\omega$) tout en bloquant lesdits faisceaux de rayonnement laser de fréquence fondamentale ($\omega$),
d) ledit cristal non linéaire, ledit au moins un dispositif de filtrage spectral et ledit spectromètre imageur (10) étant agencés pour détecter une trace d'autocorrélation monocoup de type intensimétrique d'ordre deux à la fréquence optique double ($2\omega$) résolue spectralement.

**12.** Dispositif autocorrélateur selon la revendication 10, **caractérisé en ce qu'**il est constitué de :

a) un composant optique à division de front d'onde disposé pour recevoir le front d'onde collimaté d'une impulsion laser ultra-brève à analyser et pour diviser spatialement ce front d'onde collimaté en un premier front d'onde divisé se propageant suivant une première direction et en un second front d'onde divisé se propageant suivant une seconde direction formant un angle non nul avec la première direction,

b) un cristal optique non linéaire de type I, ledit cristal non linéaire étant agencé pour recevoir lesdits fronts d'onde, issus dudit composant optique à division de front d'onde, en recouvrement au moins partiel, ledit cristal optique non linéaire de type I ayant une face de sortie,

c) au moins un dispositif de filtrage spectral placé entre ledit cristal non linéaire de type I et ledit spectromètre imageur, et

d) la face de sortie dudit cristal optique non linéaire étant placée à proximité de la fente d'entrée de ce spectromètre imageur, ledit cristal non linéaire, ledit au moins un dispositif de filtrage spectral et ledit spectromètre étant agencés pour détecter une trace d'autocorrélation monocoup de type interférométrique d'ordre deux à la fréquence optique double (2ω).

13. Utilisation du spectromètre imageur selon l'une quelconque des revendications 1 à 9 ou du dispositif autocorrélateur optique monocoup selon l'une quelconque des revendications 10 à 12 avec une source de lumière laser ultrarapide dont la longueur d'onde est comprise dans la plage de longueurs d'onde [1120 - 2600 nm] et dont l'intensité crête est adaptée pour générer dans le détecteur d'image de l'absorption à 2 photons, le détecteur d'image étant basé sur un semi-conducteur silicium.

**Patentansprüche**

1. Bildspektrometer (10), umfassend:

- einen Eingangsspalt (11), der es ermöglicht, Strahlung über einen Wellenlängenbereich zu empfangen,
- einen in zwei Richtungen auflösenden Bilddetektor (18),
- einen sphärischen Spiegel (12) mit dem Brennpunkt F, der dem Eingangsspalt (11) gegenüberliegt,
- eine spektral dispergierende optische Anordnung (17) zum Dispergieren der Strahlung in Abhängigkeit von der Wellenlänge und zum Fokussieren derselben in eine Detektionsebene des Bilddetektors,
- einen Extraktionsspiegel (16) zum Lenken der vom sphärischen Spiegel (12) kommenden Strahlung auf die spektral dispergierende optische Anordnung (17), wobei der Eingangsspalt (11) und der sphärische Spiegel (12) derart angeordnet sind, dass die Strahlung unter einem Einfallswinkel zwischen ]0,8°], besser ]0,2°] und am stärksten bevorzugt um oder gleich 1° auf den sphärischen Spiegel (12) trifft, und
- eine zwischen dem Eingangsspalt (11) und dem sphärischen Spiegel (12) angeordnete Blende (13), wobei diese Blende vor dem sphärischen Spiegel angeordnet und an diesen angrenzend ist, so dass nur der zentrale Teil des sphärischen Spiegels die einfallende Strahlung reflektiert, wobei diese Blende einen Spalt (14) aufweist, der von zwei massiven Wänden (15) begrenzt wird, wobei dieser Spalt senkrecht zum Eingangsspalt angeordnet ist.

2. Bildspektrometer nach Anspruch 1, **dadurch gekennzeichnet, dass** der Extraktionsspiegel (16) und die spektral dispergierende optische Anordnung (17) in Bezug auf den sphärischen Spiegel (12) derart angeordnet sind, dass die spektral dispergierende optische Anordnung (17) in einem Abstand vom sphärischen Spiegel (12) angeordnet ist, der gleich oder im Wesentlichen gleich der Brennweite dieses sphärischen Spiegels (12) ist.

3. Bildspektrometer nach Anspruch 1 oder 2, **dadurch gekennzeichnet, dass** die spektral dispergierende optische Anordnung (17) ein Durchstrahlungs-Beugungsgitter (19) umfasst.

4. Bildspektrometer nach Anspruch 3, **dadurch gekennzeichnet, dass** die spektral dispergierende optische Anordnung (17) ein optisches Fokussierelement (20) umfasst, wobei das optische Fokussierelement (20) so nah wie möglich an dem Durchstrahlungs-Beugungsgitter (19) angeordnet ist.

5. Bildspektrometer nach einem der vorstehenden Ansprüche, **dadurch gekennzeichnet, dass** die spektral dispergierende optische Anordnung (17) ein optisches Fokussierelement (20) umfasst, das eine Linse mit einer Brennweite zwischen 25 mm und 75 mm ist, wobei die Linse vorzugsweise achromatisch ist.

6. Bildspektrometer nach einem der vorstehenden Ansprüche, **dadurch gekennzeichnet, dass** die spektral dispergierende optische Anordnung (17) ein optisches Fokussierelement (20) umfasst, das eine Linse ist, wobei das Spektrometer eine Einrichtung zum Kompensieren der räumlichen Verschiebung der Brennpunkte in Abhängigkeit von der Wellenlänge der Strahlen des Strahls aufweist.

7. Bildspektrometer nach einem der vorstehenden Ansprüche, **dadurch gekennzeichnet, dass** die spektral dispergierende optische Anordnung (17) ein optisches Fokussierelement umfasst, wobei das optische Fokussierelement und der sphärische Spiegel (12) so konfiguriert sind, dass die Vergrößerung $\gamma$ streng kleiner als eins (1) ist.

**8.** Bildspektrometer nach einem der vorstehenden Ansprüche, **dadurch gekennzeichnet, dass** der sphärische Spiegel (12) einen Öffnungsdurchmesser H aufweist, der streng größer ist als die Höhe h des Eingangsspalts (11).

**9.** Bildspektrometer nach einem der vorstehenden Ansprüche, **dadurch gekennzeichnet, dass** der in zwei Richtungen auflösende Bilddetektor auf einem Silizium-Halbleiter basiert.

**10.** Optische Einzelschuss-Autokorrelatorvorrichtung zur Analyse eines ultrakurzen Laserimpulses, umfassend ein Bildspektrometer (10) nach einem der Ansprüche 1 bis 9.

**11.** Autokorrelatorvorrichtung nach Anspruch 10, **dadurch gekennzeichnet, dass** diese Autokorrelatorvorrichtung zusätzlich zu dem Bildspektrometer (10) lediglich umfasst:

a) einen Polarisationsteiler zum winkelmäßigen Aufteilen eines einfallenden Laserstrahls mit einer optischen Grundfrequenz ($\omega$) in zwei Laserstrahlen mit der Grundfrequenz ($\omega$) und zueinander orthogonalen linearen Polarisationen, wobei die beiden Strahlen am Ausgang des Teilers einen Winkel $\alpha$ zueinander bilden, wobei der Winkel $\alpha$ ungleich Null ist, sodass sich die Strahlen am Ausgang des Teilers wenigstens teilweise überlappen,
b) einen nichtlinearen Kristall vom Typ II, wobei der nichtlineare Kristall derart angeordnet ist, dass er die vom Strahlteiler ausgehenden, sich wenigstens teilweise überlappenden Strahlen empfängt, um am Ausgang des Kristalls einen einzigen Laserstrahl mit harmonischer Frequenz (2w) zu erzeugen, der eine Autokorrelationsspur zweiter Ordnung mit einer optischen Frequenz $2\omega$ darstellt,
c) wenigstens eine Spektralfiltervorrichtung, die dazu ausgebildet ist, den Laserstrahl mit harmonischer Frequenz ($2\omega$) selektiv durchzulassen, während sie die Laserstrahlen mit Grundfrequenz ($\omega$) blockiert,
d) wobei der nichtlineare Kristall, die wenigstens eine Spektralfiltervorrichtung und das Abbildungsspektrometer (10) dazu angeordnet sind, ein spektral aufgelöstes, intensitätsbasiertes Einzelschuss-Autokorrelationsmuster zweiter Ordnung bei der doppelten optischen Frequenz (2w) zu erfassen.

**12.** Autokorrelatorvorrichtung nach Anspruch 10, **dadurch gekennzeichnet, dass** sie besteht aus:

a) einer optischen Wellenfrontteilungskomponente, die dazu angeordnet ist, die kollimierte Wellenfront eines zu analysierenden ultrakurzen Laserimpulses zu empfangen und diese kollimierte Wellenfront räumlich aufzuteilen in eine erste geteilte Wellenfront, die sich in einer ersten Richtung ausbreitet, und in eine zweite geteilte Wellenfront, die sich in einer zweiten Richtung ausbreitet, die einen von Null verschiedenen Winkel mit der ersten Richtung bildet,
b) einem nichtlinearen optischen Kristall vom Typ I, wobei der nichtlineare Kristall dazu angeordnet ist, die von der optischen Wellenfront-Teilungskomponente ausgehenden Wellenfronten wenigstens teilweise überlappend zu empfangen, und wobei der nichtlineare optische Kristall vom Typ I eine Austrittsfläche aufweist,
c) wenigstens eine Spektralfiltervorrichtung, die zwischen dem nichtlinearen Kristall vom Typ I und dem Bildspektrometer angeordnet ist, und
d) wobei die Austrittsfläche des nichtlinearen optischen Kristalls in der Nähe des Eingangsspalts dieses Bildspektrometers angeordnet ist, wobei der nichtlineare Kristall, die wenigstens eine Spektralfiltervorrichtung und das Spektrometer dazu augebildet sind, eine interferometrische Einzelschuss-Autokorrelationsspur zweiter Ordnung bei der doppelten optischen Frequenz (2w) zu erfassen.

**13.** Verwendung des Bildspektrometers nach einem der Ansprüche 1 bis 9 oder der optischen Einzelschuss-Autokorrelationsvorrichtung nach einem der Ansprüche 10 bis 12 mit einer ultraschnellen Laserlichtquelle, deren Wellenlänge im Wellenlängenbereich [1120-2600 nm] liegt und deren Spitzenintensität so ausgelegt ist, dass sie im Bilddetektor eine Zwei-Photonen-Absorption erzeugt, wobei der Bilddetektor auf einem Silizium-Halbleiter basiert.

## Claims

**1.** Imaging spectrometer (10) comprising

- an entrance slit (11) for receiving a radiation over a range of wavelengths,
- an image detector (18) resolved along two directions,
- a spherical mirror (12) with a focus F placed opposite said entrance slit (11),
- a spectrally dispersive optical assembly (17) to disperse said radiation according to the wavelength and focus it in a detection plane of the image detector,
- an extraction mirror (16) to direct the radiation from the spherical mirror (12) onto the spectrally dispersive optical assembly (17), said entrance slit (11) and said spherical mirror (12) being arranged such that the radiation is incident on said spherical mirror (12) at an incidence angle between ]0, 8°], even better ]0, 2°] and even more preferably around or equal to 1°, and
- a cover (13) interposed between said entrance slit (11) and said spherical mirror (12), this cover being placed in front of and adjoined to the spherical mirror so that only the central part of the spherical mirror reflects the incident radiation, this cover including a slit (14) delimited by two solid walls (15), this slit being placed perpendicularly to the entrance slit.

**2.** Imaging spectrometer according to claim 1, **characterised in that** said extraction mirror (16) and said spectrally dispersive optical assembly (17) are arranged relative to said spherical mirror (12) such that said spectrally dispersive optical assembly (17) is placed at a distance from the spherical mirror (12) which is equal to, or substantially equal to, the focal distance of this spherical mirror (12).

**3.** Imaging spectrometer according to claim 1 or 2, **characterised in that** said spectrally dispersive optical assembly (17) comprises a transmitting diffraction grating (19).

**4.** Imaging spectrometer according to claim 3, **characterised in that** said spectrally dispersive optical assembly (17) comprising a focusing optical element (20), said focusing optical element (20) is placed as close as possible to said transmitting diffraction grating (19).

**5.** Imaging spectrometer according to any one of the preceding claims, **characterised in that** said spectrally dispersive optical assembly (17) comprises a focusing optical element (20) which is a lens having a focal distance between 25 mm and 75 mm, said lens being preferably achromatic.

**6.** Imaging spectrometer according to any one of the preceding claims, **characterised in that** said spectrally dispersive optical assembly (17) comprising a focusing optical element (20) which is a lens, said spectrometer includes a means to compensate for the spatial shift of the focusing points according to the wavelength of the beam rays.

**7.** Imaging spectrometer according to any one of the preceding claims, **characterised in that** said spectrally dispersive optical assembly (17) comprising a focusing optical element, said focusing optical element and said spherical mirror (12) are configured such that the magnification Y is strictly less than one (1).

**8.** Imaging spectrometer according to any one of the preceding claims, **characterised in that** said spherical mirror (12) has an opening diameter H strictly greater than the height h of said entrance slit (11).

**9.** Imaging spectrometer according to any one of the preceding claims, **characterised in that** the image detector resolved along two directions is based on a silicon semiconductor.

**10.** Single-pulse optical autocorrelator device for analysing an ultrashort laser pulse, comprising an imaging spectrometer (10) according to any one of claims 1 to 9.

**11.** Autocorrelator device according to claim 10, **characterised in that** in addition to said imaging spectrometer (10), this autocorrelator device only includes:

a) a polarisation separator to angularly separate an incident laser radiation beam having fundamental optical frequency ($\omega$), into two laser radiation beams having fundamental frequency ($\omega$) and linear polarisations orthogonal to each other, said two beams forming an angle $\alpha$ between them at the exit of said separator, said angle $\alpha$ being non-zero so that said beams overlap at least partially at the exit of said separator,
b) a type II non-linear crystal, said non-linear crystal being arranged to receive said beams, derived from said separator, in at least partial overlap so as to generate at the exit of said crystal a single laser radiation beam having harmonic frequency ($2\omega$), which is a second order autocorrelation trace having an optical frequency $2\omega$,
c) at least one spectral filtering device configured to selectively allow said laser radiation beam having harmonic frequency ($2\omega$) to pass while blocking said laser radiation beams having fundamental frequency ($\omega$),
d) said non-linear crystal, said at least one spectral filtering device and said imaging spectrometer (10) being arranged to detect a two-order intensity type single-pulse autocorrelation trace at the double optical frequency ($2\omega$) spectrally resolved.

**12.** Autocorrelator device according to claim 10, **characterised in that** it consists of:

a) a wavefront-split optical component disposed to receive the collimated wavefront of an ultrashort laser pulse to be analysed and to spatially split this collimated wavefront into a first split wavefront propagating along a first direction and a second split wavefront propagating along a second direction forming a non-zero angle with the first direction,

b) a type I non-linear optical crystal, said non-linear crystal being arranged to receive said wavefronts, derived from said wavefront-split optical component, in at least partial overlap, said type I non-linear optical crystal having an exit face,

c) at least one spectral filtering device placed between said type I non-linear crystal and said imaging spectrometer, and

d) the exit face of said non-linear optical crystal being placed in proximity to the entrance slit of this imaging spectrometer, said non-linear crystal, said at least one spectral filtering device and said spectrometer being arranged to detect a second order interferometric type single-pulse autocorrelation trace at the double optical frequency (2ω).

**13.** Use of the imaging spectrometer according to any one of claims 1 to 9 or the single-pulse optical autocorrelator device according to any one of claims 10 to 12 with an ultra-fast laser light source whose wavelength is within the wavelength range [1120 - 2600 nm] and whose peak intensity is adapted to generate 2-photon absorption in the image detector, the image detector being based on a silicon semiconductor.

10
17
20
19
16
11
18
$\theta_R$
12
13

FIG. 1

14
15
13
15

FIG. 2

21
22
23
24
25
26
27
28
30
10

**FIG. 3**

10
28
17
20
19
16
11
18
$\theta_R$
12
13
27

**FIG. 4**

10
17
20
19
16
11
18
θR
12
13
29

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2017037402 A
- US 2015219495 A


### Littérature non-brevet citée dans la description


- Characterization of ultrashort electromagnetic pulses. **IAN WALMSLEY et al.** Advances in Optics and Photonics. Optical Society of America, 2009
- **PANASENKO et al.** Single-shot generation of femtosecond laser pulse sonogram using two-photon conductivity in a silicon CCD. *CLEO*, 2002
- **PANASENKO et al.** Single-shot sonogram generation for femtosecond laser pulse diagnostics by use of two-photon absorption in a silicon CCD camera. *Optics Letters*, 2002